(19) Europäisches Patentamt
European Patent Office
Office européen des brevets

(11) **EP 4 132 793 B1**

(12) **EUROPEAN PATENT SPECIFICATION**

(45) Date of publication and mention
of the grant of the patent:
**10.01.2024 Bulletin 2024/02**

(21) Application number: **21711828.0**

(22) Date of filing: **09.03.2021**

(51) International Patent Classification (IPC):
*B41J 2/21* (2006.01)   *B41J 29/393* (2006.01)
*H04N 1/60* (2006.01)   *G06T 7/00* (2017.01)
*G06N 3/00* (2023.01)   *G06F 3/12* (2006.01)
*G06N 3/04* (2023.01)   *G06N 3/08* (2023.01)
*G06N 3/045* (2023.01)   *G06N 3/084* (2023.01)

(52) Cooperative Patent Classification (CPC):
**B41J 2/2132; B41J 2/2139; B41J 2/2142;
B41J 29/393; G06N 3/045; G06T 7/0002;**
B41J 2029/3935; G06N 3/084; G06T 2207/20081;
G06T 2207/20084; G06T 2207/30176; H04N 1/6033

(86) International application number:
**PCT/EP2021/055957**

(87) International publication number:
**WO 2021/204480 (14.10.2021 Gazette 2021/41)**

(54) **METHOD OF EVALUATING PRINTHEAD CONDITION**

VERFAHREN ZUR BEURTEILUNG DES ZUSTANDS EINES DRUCKKOPFS

PROCÉDÉ D'ÉVALUATION DE L'ÉTAT D'UNE TÊTE D'IMPRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.04.2020   US 202063008499 P**

(43) Date of publication of application:
**15.02.2023   Bulletin 2023/07**

(73) Proprietor: **Memjet Technology Limited
Dublin D18 H5H9 (IE)**

(72) Inventor: **LAU, Daniel
San Diego, CA 92127 (US)**

(56) References cited:
**DE-A1-102019 208 149     US-A1- 2019 248 153**

**Description**

Field of the Invention

This invention relates to a method of evaluating a condition of a printhead, such as an inkjet printhead. It has been developed primarily to enable an end-of-life of the printhead to be predicted and communicated to users.

Background

Inkjet printheads are being used increasingly in high volume applications, such as digital presses. For example, US 9,139,031 and US 10,081,204 describe digital presses employing pagewide inkjet printheads.

In such high-volume printing applications, printheads typically require periodic replacement by users. For example, in thermal inkjet printheads, heater elements may fail due to kogation or corrosion over time and the printhead therefore has a finite lifetime.

In many instances, printheads are replaced after a predetermined volume of ink has been consumed by the printhead, in accordance with a manufacturer's recommendation. However, replacement of printheads based on such a crude metric is unreliable. For example, some printing fluids result in shorter printhead lifetimes compared to other printing fluids. In some instances, the type of images printed may lead to faster or slower deterioration of the condition of the printhead - evenly spread usage across the printhead usually results in a relatively longer printhead life; intensive usage in one region of the printhead usually results in a relatively shorter printhead life. Therefore, users may prematurely replace healthy printheads in some instances. Alternatively, users may print images using a poorly performing printhead in other instances, resulting in wastage of media.

Moreover, inspection of print quality is not generally a reliable indicator of the condition of a printhead. Poor print quality may be a result of, for example, printhead misalignment, dust on the printhead or temporarily blocked nozzles. Therefore, print quality may not be a true indicator of the printhead nearing or reaching its end of life.

It would be desirable to provide a method by which the condition of a printhead can be reliably determined. It would further be desirable to provide a method of predicting an end of life of the printhead, enabling users to replace printheads at an optimum time.

US 2019/248153 A1 and DE 10 2019 208149 A1 represent further relevant prior art.

Summary of Invention

According to the invention, there is provided a method of evaluating a condition of a printhead according to claim 1.

The method advantageously provides a means by which users can evaluate the condition of a printhead during use, without relying on crude indicators such as ink usage. In particular, the method may be used to provide an indication to users as to whether the printhead is nearing its end of life and should be replaced.

Preferred aspects of the invention are described hereinbelow and in the dependent claims attached hereto.

Brief Description of the Drawings

One or more embodiments of the present invention will now be described with reference to the drawings, in which:

Figure 1 is a plan view of a portion of a pagewide inkjet printhead having multiple butting printhead chips;
Figure 2 is a test image have sixteen fixed density bars ranging of 0 to 100% density;
Figure 3 is a magnified view of part of the test image showing a region of interest demarcated by dashed boundary lines;
Figure 4 shows one-dimensional optical density signals generated from the test image shown in Figure 2;
Figure 5 shows one embodiment of a convolutional neural network (CNN) used for analyzing samples of a one-dimensional optical density signal; and
Figure 6 shows validation results of the CNN with distribution of CNN scores versus ground truth scores.

Detailed Description of One Embodiment

As foreshadowed above, crude techniques for determining printhead life, such as measurement of ink usage, are generally unreliable and typically result in premature replacement of healthy printheads.

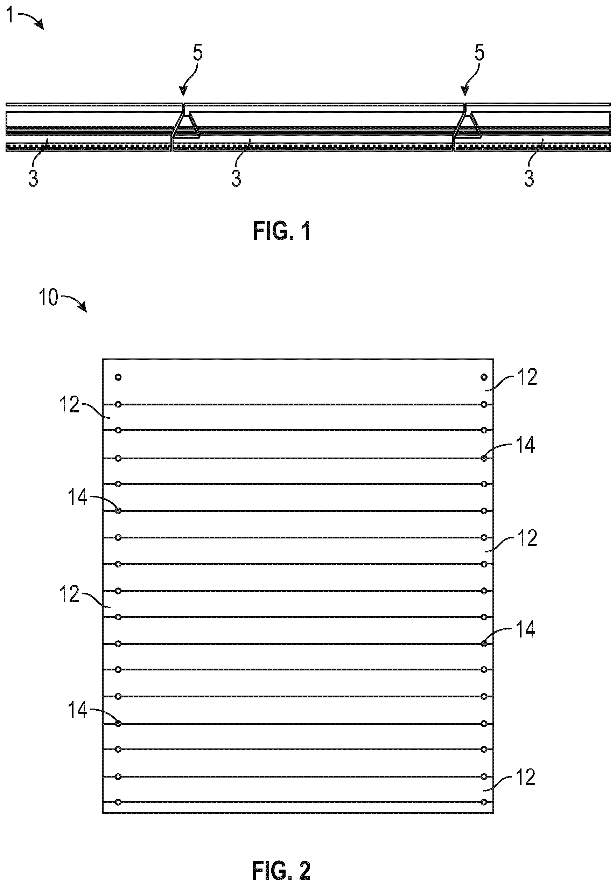

Over the lifetime of multiple printheads in the field, a vast amount of data may be generated from optical analyses of test images. Typically, optical analysis of a test image is used to apply optical density compensation (ODC) for improved print quality. For example, due to MEMS manufacturing tolerances, some nozzles in a printhead may be smaller than others and eject lower volumes of ink resulting in lower optical density in the printed image. ODC is a means by which regions of lower optical density can be compensated by adjusting dither thresholds applied during halftoning. Using ODC, the resulting printed image is a truer representation of the original contone image, even with nozzle size variations across the printhead. ODC is also particularly useful for compensating banding artefacts in single pass printing, which arise from stitching multiple printhead chips or printheads together. In a Memjet® printhead, so-called "banding artefacts" (i.e. vertical streaks) characteristically occur at about 2,54 cm (1 inch) intervals corresponding to a length of each printhead chip in the printhead. Figure 1 shows a portion of a pagewide inkjet printhead 1 having multiple printhead chips 3 butted together. In the join regions 5 between consecutive printhead chips 3, banding artefacts in the form of vertical streaks may be observed in printed images,

In order to apply ODC, a test image is printed and scanned using a suitable optical scanner or an inline vision system downstream of the printhead. Figure 2 shows a typical test image 10 having sixteen horizontal fixed-density bars 12, the boundaries of which are indicated by respective bull's-eye fiducials 14. These bars 12 increase in density down the page from 0 to 100% in equal steps. In the ODC technique, optical analysis of each bar 12 yields a one-dimensional optical density signal, which is used to adjust dither values in a RIP generating halftone images for the printhead.

However, in the method described herein, data captured from test images, such as the test image 10 used in ODC, are used to characterize a condition of the printhead 1 using machine learning. As will be well known to the person skilled in the art, machine learning is a powerful technique that has been applied to many different fields, such as image and audio recognition. In the present context, machine learning is applied to the one-dimensional optical density signal extracted from a printed test image in order to evaluate the condition of the printhead and provide an indication of the printhead's end-of-life.

The test images 10 may, for example, be printed and analysed periodically (e.g. every 1000 sheets) over the lifetime of the printhead for evaluation thereof. Typically, the condition of the printhead rapidly declines towards its end of life and it is advantageous to notify users when the printhead has entered this state of rapid decline so that the printhead can be replaced.

*CNN Printhead Evaluation*

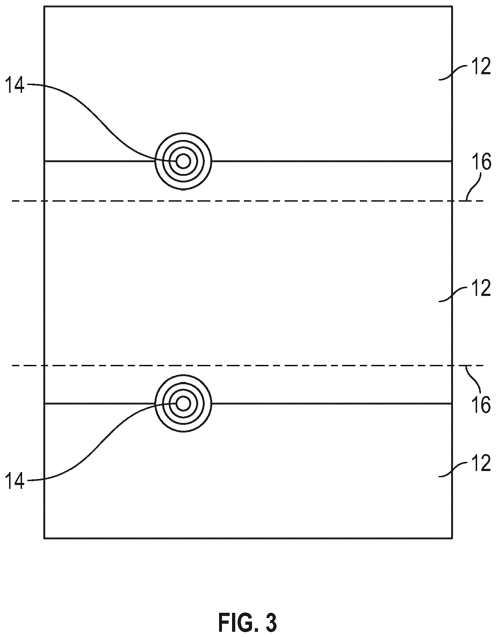

In one preferred embodiment, the test image 10 is scanned at 600 dpi and processed by identifying the position of bull's-eye fiducials 14. The captured image is then digitally warped in order to move the bull's-eye fiducials 14 to their original coordinates in the test image 10. At this point, the scanned image is considered in perfect pixel-by-pixel alignment with the test image 10. Each fixed-density bar 12 of the scanned image is then cropped such that pixels near the boundary of neighboring bars are discarded. This guard band of pixels is wide enough such that the bull's-eye fiducials 14 are similarly discarded. The only remaining pixels are therefore safely inside each fixed-density bar 12, as indicated by the dashed boundary lines 16 in Fig. 3.

Once the fixed-density bars 12 are segmented to exclude the fiducials 14, the 1-D optical density signal for each bar ("region of interest") is generated. The rows (*m*) of the cropped region of interest (ROI) are averaged together down a column (*n*) of pixels. For instance, the ROI of Fig. 2 has 1272 columns and 54 rows. So the resulting 1-D signal is indicated as x[n] is derived from the ROI, *y[m, n],* according to:

$$x[n] = \frac{1}{M} \sum_{m=1}^{M} y[n, m],$$

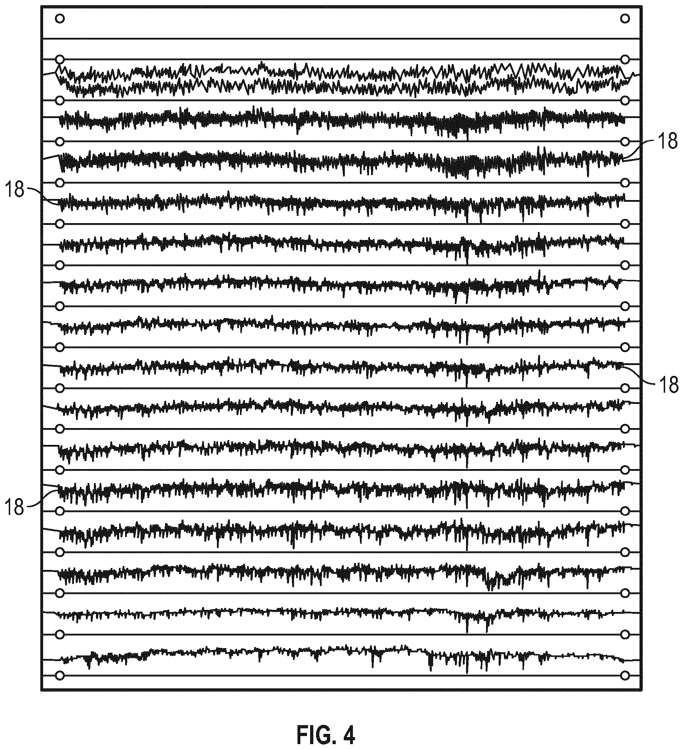

where *M* is the number of rows in the ROI. Figure 4 shows 1-D optical density signals 18 generated for each of the fixed-density bars 12 in the test image 10 shown in Figure 3.

Having generated a pagewide 1-D vector representing optical density, the goal of the AI is to develop a sliding window that traverses the vector and assigns a score to that position within the vector corresponding to how many pages have been printed.

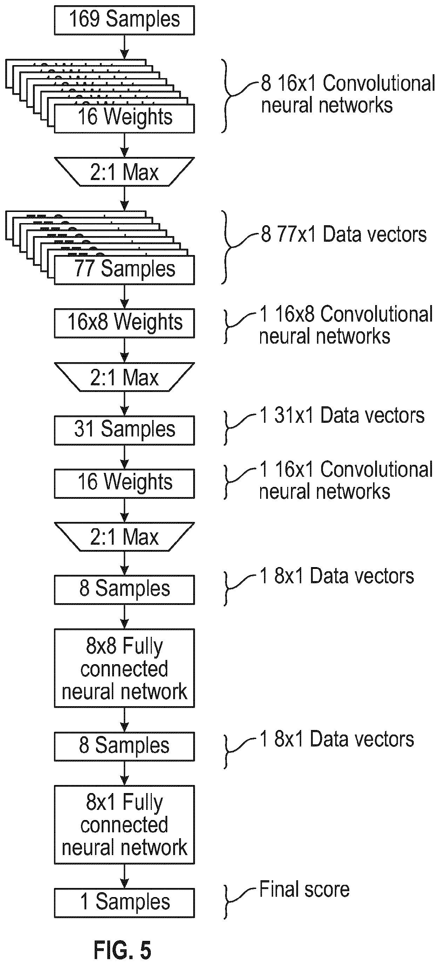

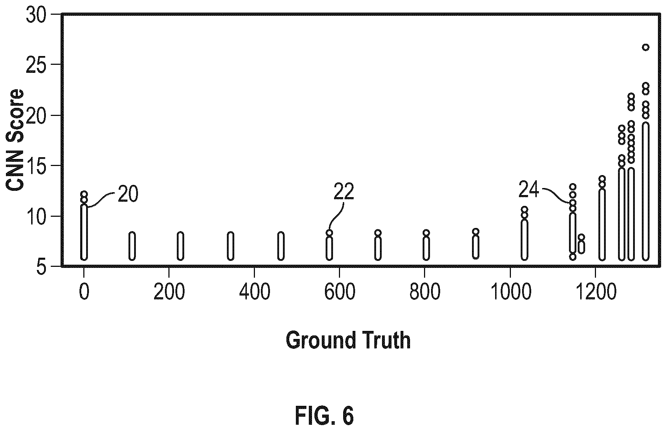

Figure 5 shows one embodiment of the convolution neural network (CNN), which accepts as input, a sliding window of 169 samples from *x[n]*. This vector is then processed by means of 8 separate sliding window 16 × 1 neural networks. In Figure 6, unshaded blocks represent the change in size of the input values, while shaded blocks represent the functional operations of the CNN.

A sliding window neural network is identical to a discrete finite impulse response (FIR) filter that is convolved with the input vector except that the sliding window neural network adds a bias to the output. A bias is a scalar constant added to the output. Specifically, the operation of the sliding window neural network is given by:

$$x_o[n] = \beta + \sum_{m=0}^{M-1} w[m]x_i[n - m],$$

where $x_i[n]$ is the $n^{th}$ sample of the input vector, $x_o[n]$ is the $n^{th}$ sample of the output vector, $w[m]$ is the $m^{th}$ weight defining the slide neural network, and $\beta$ is the scalar bias or offset added to the output of the convolution operation.

Another idiosyncrasy of the sliding window neural network is how it handles the edges of the input vector. In particular, there are values of *m* and *n* such that *n - m* correspond to negative time indices inside $x_i[n - m]$. In the above implementation, these values are discarded from the output so that the output vector, $x_o[n]$, has a length of *N - M* + 1 which is *M* - 1 samples shorter than $x_i[n]$. So with this first set of 8 separate sliding window 16 × 1 neural networks, the 169-sample input vector becomes 8 separate 169 - 15 = 154 sample output vectors.

The 8 length-154 output vectors are then processed by means of a 2 × 1 max-pooling layer. This is a simple operation that takes each of the 8 windows and divides them into 77 non-overlapping length-2 vectors. For each length-2 vector, the pooling layer chooses the largest of the 2 values, and replaces the length-2 vector with this 1 scalar value. As such, the 8 length-154 output vectors becomes 8 length-77 output vectors.

The next stage of processing is another series of sliding window neural networks, specifically, there are 8 separate sliding window $16 \times 1$ neural networks with 1 unique sliding window $16 \times 1$ neural network for each of the 8 length-77 output vectors from the previous stage. The outputs of these 8 sliding window neural networks correspond to 8 (77-15) = 62-sample vectors which are then summed together into a single 62-sample output vector. This vector is then downsampled using another $2\times1$ max-pooling layer, choosing the maximum scalar value for each length-2 sample vectors and resulting in a single length-31 vector.

The next stage of processing is a single sliding window $16 \times 1$ neural network followed by another $2 \times 1$ max-pooling layer. The output of these two operations is a single length-8 vector. The length-8 vector is finally processed by a fully connected convolutional network with 1 hidden layer. Specifically, the mathematical operation on the length-8 vector is that it as multiplied by an $8 \times 8$ matrix to produce another length-8 vector. Each element of this resulting vector is then offset by a separate bias term. The resulting length-8 vector is considered the hidden layer, which is then processed by a second fully connected neural network that is performed by multiplying the length-8 hidden layer vector with an $8 \times 1$ matrix to produce a length-1 vector, a scalar value. This scalar value is offset by a bias term with the resulting scalar value the output of the network. With proper training, it is this scalar output that is indicative of the condition (or the age) of the printhead.

Whilst the evaluation process has been described above in connection with a pagewide inkjet printhead, it will readily understood by those skilled in the art that this evaluation process may be used in any type of printhead or printing device having a limited lifetime.

*CNN Training*

Training of the CNN means specifying the weights, $w[m]$, and biases, $\beta$, of the sliding window convolutional neural networks as well as the fully connected neural networks used in the final stages of the CNN. Training of a CNN is generally a well-known process, and in the present context, involves choosing an initial set of weights and biases and then running training data through the network whose printhead score is already known. The difference between the output of the network and the already known age is then used to derive an error that is back-propagated through the network in order to update the weights and biases of the various neural networks.

The key to the success of this procedure at training the CNN and obtaining reliable scores in the end is how to acquire the training data. By way of example only, print data was collect from a set of 28 different printheads.

Each printhead was mounted in a Memjet® label printer and used to print test images beyond the count that would normally be deemed end of life. Of the many test images printed, the test image of Figure 2 was included and preserved. So for each of the 28 printheads, 9 to 18 test charts were preserved ranging from the beginning to the end of each printhead's life. These printed test images 10 were nominally labelled with a number from 0, for a brand new printhead, to 1318, for an end of life printhead. This number is the desired output of the CNN and, accordingly, the ground truth score for training.

To acquire the 1D signal from the printed sheets, the test images 10 were scanned using a flatbed scanner at 600 dpi and processed. Specifically, each fixed-density bar 12 of the test chart 10, is analysed with reference to the bull's eye fiducials 14, as described above. A single scan, therefore, generate 16 unique signals with one 1-D signal 18 for each step in ink density as depicted in Figure 4. Having scanned all 28 printheads with a total of 396 test charts, the training data was restricted to the 11/16 fixed-density bar based on a visual assessment where banding artefacts were deemed most visible. The resulting 396 signals were then divided into segments of 169 samples randomly selected from each curve. Specifically, 7,424 separate segments were extracted on which the CNN was trained. Of these, about 25% were used for actual training while the remainder were used for validation.

Whilst CNN training has been described above using only a small sample of 28 printheads, it will be readily appreciated that, in practice, CNN training using a larger sample of printheads will improve the accuracy of the CNN for evaluating printhead life. Training data may be acquired from a large number of printheads in the field so as to continuously optimize the CNN. According to the invention, training data from printheads in the field are sent over a computer network to a server so as to train the CNN; users may then receive periodic software upgrades based on the updated CNN and, therefore, improve the accuracy of printhead end-of-life evaluations in the field.

*CNN Validation*

The term "training data" generally refers to all the data with labels, *i.e.* ground truth scores; however, training data is divided into collection data used to train the weights and biases of the CNN, as described above, and the remainder, which is used to confirm that the final CNN accurately scores the data. This second set of data is the validation data, as shown in Figure 6.

As shown in Figure 6, the CNN scores are strongly correlated to how the printhead performs in practice, in terms of banding artefacts. A brand new printhead shows a degree of banding during an initial break-in period 20. It then settles into its natural banding state, which it maintains until about 80-90% of its life 22. In the last 10% or so of printhead life 24, banding artefacts increase dramatically. The CNN score, therefore, provides a good indication of the printhead's end-of-life and, moreover, an indication to users that a printhead needs to be replaced.

*Signal Prefiltering*

In order to maximize the performance of a neural network, it is often beneficial to pre-process the data as a sort of normalization process. For instance, when classifying images, programmers will apply a histogram equalization or edge detector process so that the classifier detects patterns in the edges and does not focus on features like the mean value of the data. Evaluating printhead life is no different in that the mean value of the signal needs to be removed so that the neural network can focus on the pattern of streaks (corresponding to banding artefacts), which appear as spikes in the 1-D signal.

Specifically, it is noted that the spikes exist primarily in the high frequency spectral bands of the signal, and as such, the signal is prefiltered using a discrete, stationary wavelet transform using the Daubechies-5 wavelet where the original signal is decomposed to its level-5 coefficients. These 5th level coefficients are then discarded and the signal reconstructed. Since the streaks associated with printhead defects are largely restricted to the first few levels, discarding the level-5 coefficients should have no effect on the classifier.

A benefit of the above pre-filtering process is that it allows user image content to exist in the deeper decomposition levels without affecting the ability of the CNN to measure printhead life. This means that dedicated space on the printed page for a calibration target becomes unnecessary and that printhead life can be evaluated with no consequence to the user. Therefore, any relatively 'flat' contone region of a printed image may be used for evaluation of printhead life using the CNN, without the need for analysis of a dedicated printhead test image. For example, a blue sky may be a suitable region of a printed image for analysis.

The foregoing describes only some embodiments of the present invention, and modifications of detail may be made thereto without departing from the scope of the invention being defined by the appended claims, the embodiments being illustrative and not restrictive.

**Claims**

1. A method of evaluating a condition of a printhead, said method comprising the steps of:

    (i) printing an image using the printhead;
    (ii) optically imaging at least part of the printed image and determining optical densities for a portion of the printed image;
    (iii) converting the optical densities into a one-dimensional signal;

    (iv) analyzing one or more portions of the signal using a convolutional neural network to generate a classification for corresponding portions of the signal; and
    (v) using each classification to evaluate the condition of corresponding portions of the printhead,

    wherein:

        the convolutional neural network is based on a set of training images from analyses of a plurality of printheads having a known condition;
        additional training images are acquired from a plurality of printers connected via a computer network; and
        the convolutional neural network is updated using the additional training images, thereby refining the method of evaluating the condition of the printhead.

2. The method of claim 1, wherein the image is a predetermined test image.

3. The method of claim 2, wherein the test image is printed periodically by the printhead for periodic evaluation of the condition of the printhead.

4. The method of claim 3, wherein the test image is optically imaged using an imaging system downstream of the printhead relative to a media feed direction.

5. The method of claim 2, wherein the test image comprises one or more elongated bars extending parallel with the printhead, and the optical densities are determined along a length of each bar.

6. The method of claim 5, wherein the test image comprises a plurality of fixed-density bars, each bar having a different density.

7. The method of claim 5, wherein the optical density at each horizontal position of one bar is determined by averaging optical densities for a plurality of corresponding vertical positions.

8. The method of claim 5, wherein the test image is additionally used in a method of compensating optical density variations in the printhead.

9. The method of claim 1, wherein the printed image is a contone image and the optically imaged part contains relatively unvarying shades or smoothly varying shades compared to other parts of the contone image.

10. The method of claim 1, wherein the convolutional neural network is a sliding window neural network.

11. The method of claim 1, wherein the classification is based on a degree of streaking in the image.

12. The method of claim 8, wherein the degree of streaking is characteristic of the condition of the printhead.

13. The method of claim 1, wherein the method is used to predict an end of life of the printhead.

14. The method of claim 13, wherein a printhead user is notified of the predicted end of life.

15. The method of claim 1, wherein the printhead is part of a pagewide printing system.


**Patentansprüche**

1. Verfahren zum Beurteilen des Zustands eines Druckkopfes, wobei das Verfahren die folgenden Schritte umfasst:

   (i) Drucken eines Bildes unter Verwendung des Druckkopfes;
   (ii) optisches Abbilden zumindest eines Teils des gedruckten Bildes und Bestimmen optischer Dichten für einen Teil des gedruckten Bildes;
   (iii) Umsetzen der optischen Dichten in ein eindimensionales Signal;
   (iv) Analysieren eines oder mehrerer Teile des Signals unter Verwendung eines neuronalen Faltungsnetzes, um eine Einordnung für entsprechende Teile des Signals zu erzeugen; und
   (v) Verwenden jeder Einordnung, um den Zustand entsprechender Teile des Druckkopfes zu beurteilen,

   wobei:

   das neuronale Faltungsnetz auf einer Gruppe von Schulungsbildern von Analysen mehrerer Druckköpfe mit einem bekannten Zustand beruht;
   zusätzliche Schulungsbilder von mehreren Druckern, die über ein Computernetz verbunden sind, erfasst werden; und
   das neuronale Faltungsnetz unter Verwendung der zusätzlichen Schulungsbilder aktualisiert wird, wodurch das Verfahren zum Beurteilen des Zustands des Druckkopfes verfeinert wird.

2. Verfahren nach Anspruch 1, wobei das Bild ein vorgegebenes Testbild ist.

3. Verfahren nach Anspruch 2, wobei das Testbild durch den Druckkopf für eine periodische Beurteilung des Zustands des Druckkopfes periodisch gedruckt wird.

4. Verfahren nach Anspruch 3, wobei das Testbild unter Verwendung eines Abbildungssystems, das in Bezug auf eine Medieneinführrichtung dem Druckkopf nachgelagert ist, optisch abgebildet wird.

5. Verfahren nach Anspruch 2, wobei das Testbild einen oder mehrere langgestreckte Balken umfasst, die sich parallel zu dem Druckkopf erstrecken, und die optischen Dichten entlang einer Länge jedes Balkens bestimmt werden.

6. Verfahren nach Anspruch 5, wobei das Testbild mehrere Balken mit festgelegten Dichten umfasst, wobei jeder Balken eine andere Dichte besitzt.

7. Verfahren nach Anspruch 5, wobei die optische Dichte an jeder horizontalen Position eines Balkens durch Mitteln optischer Dichten für mehrere entsprechende vertikale Positionen bestimmt wird.

8. Verfahren nach Anspruch 5, wobei das Testbild zusätzlich in einem Verfahren zum Kompensieren optischer Dichtevariationen in dem Druckkopf verwendet wird.

9. Verfahren nach Anspruch 1, wobei das gedruckte Bild ein Konturenbild ist und der optisch abgebildete Teil relativ nicht variierende Farbtöne oder gleichmäßig variierende Farbtöne im Vergleich zu anderen Teilen des Konturenbildes enthält.

10. Verfahren nach Anspruch 1, wobei das neuronale Faltungsnetz ein neuronales Netz mit Gleitfenster ist.

11. Verfahren nach Anspruch 1, wobei die Einordnung auf einem Grad der Streifenbildung in dem Bild beruht.

12. Verfahren nach Anspruch 8, wobei der Grad der Streifenbildung für den Zustand des Druckkopfes charakteristisch ist.

13. Verfahren nach Anspruch 1, wobei das Verfahren verwendet wird, um ein Lebensende des Druckkopfes vorherzusagen.

14. Verfahren nach Anspruch 13, wobei einem Anwender des Druckkopfes das vorhergesagte Lebensende gemeldet wird.

15. Verfahren nach Anspruch 1, wobei der Druckkopf Teil eines seitenübergreifenden Drucksystems ist.

**Revendications**

1. Procédé d'évaluation de l'état d'une tête d'impression, ledit procédé comportant les étapes consistant à :

   (i) imprimer une image à l'aide de la tête d'impression ;
   (ii) effectuer une imagerie optique d'au moins une partie de l'image imprimée et déterminer des densités optiques pour une partie de l'image imprimée ;
   (iii) convertir les densités optiques en un signal unidimensionnel ;
   (iv) analyser une ou plusieurs parties du signal à l'aide d'un réseau neuronal convolutif afin de générer une classification pour des parties correspondantes du signal ; et
   (v) utiliser chaque classification pour évaluer l'état de parties correspondantes de la tête d'impression :

      le réseau neuronal convolutif étant basé sur un ensemble d'images d'apprentissage provenant d'analyses d'une pluralité de têtes d'impression présentant un état connu ; des images d'apprentissage supplémentaires étant acquises à partir d'une pluralité d'imprimantes connectées via un réseau informatique ; et
      le réseau neuronal convolutif étant mis à jour à l'aide des images d'apprentissage supplémentaires, affinant ainsi le procédé d'évaluation de l'état de la tête d'impression.

2. Procédé selon la revendication 1, l'image étant une image de test prédéterminée.

3. Procédé selon la revendication 2, l'image de test étant imprimée périodiquement par la tête d'impression pour une évaluation périodique de l'état de la tête d'impression.

4. Procédé selon la revendication 3, l'image de test faisant l'objet d'une imagerie optique à l'aide d'un système d'imagerie en aval de la tête d'impression par rapport à une direction d'avance de support.

5. Procédé selon la revendication 2, l'image de test comportant une ou plusieurs barres allongées s'étendant parallèlement à la tête d'impression, et les densités optiques étant déterminées suivant une longueur de chaque barre.

6. Procédé selon la revendication 5, l'image de test comportant une pluralité de barres de densité fixe, chaque barre présentant une densité différente.

7. Procédé selon la revendication 5, la densité optique à chaque position horizontale d'une barre étant déterminée en prenant la moyenne de densités optiques pour une pluralité de positions verticales correspondantes.

8. Procédé selon la revendication 5, l'image de test étant de plus utilisée dans un procédé de compensation de variations de densité optique dans la tête d'impression.

9. Procédé selon la revendication 1, l'image imprimée étant une image à tons continus et la partie soumise à l'imagerie optique contenant des nuances relativement invariantes ou des nuances variant de façon lisse en comparaison d'autres parties de l'image à tons continus.

10. Procédé selon la revendication 1, le réseau neuronal convolutif étant un réseau neuronal à fenêtre glissante.

11. Procédé selon la revendication 1, la classification étant basée sur un degré de traînage dans l'image.

12. Procédé selon la revendication 8, le degré de traînage étant caractéristique de l'état de la tête d'impression.

13. Procédé selon la revendication 1, le procédé étant utilisé pour prédire une fin de vie de la tête d'impression.

14. Procédé selon la revendication 13, un utilisateur de la tête d'impression étant informé de la fin de vie prédite.

15. Procédé selon la revendication 1, la tête d'impression faisant partie d'un système d'impression sur la largeur de la page.

FIG. 1

FIG. 2

FIG. 3

FIG. 4

169 Samples

16 Weights → 8 16x1 Convolutional neural networks

2:1 Max

77 Samples → 8 77x1 Data vectors

16x8 Weights → 1 16x8 Convolutional neural networks

2:1 Max

31 Samples → 1 31x1 Data vectors

16 Weights → 1 16x1 Convolutional neural networks

2:1 Max

8 Samples → 1 8x1 Data vectors

8x8 Fully connected neural network

8 Samples → 1 8x1 Data vectors

8x1 Fully connected neural network

1 Samples → Final score

FIG. 5

FIG. 6

**EP 4 132 793 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9139031 B
- US 10081204 B
- US 2019248153 A1
- DE 102019208149 A1